# EUROPEAN PATENT APPLICATION

(11) **EP 4 636 928 A1**
(43) Date of publication of application: **22.10.2025**
(21) Application number: 24839943.8
(22) Date of filing: 25.06.2024
(51) Int. Cl.: H01M 50/383, H01M 50/342, H01M 50/282, H01M 50/211

(54) **BATTERY MODULE, AND BATTERY PACK AND VEHICLE INCLUDING SAME**

(30) Priority: 12.07.2023 KR 20230090699
(71) Applicant: LG Energy Solution, Ltd., Seoul 07335 (KR)
(72) Inventor: PARK, Dong-Ho, Daejeon 34122 (KR)
(74) Representative: BCKIP Part mbB
(86) International application number: PCT/KR2024/008807
(87) International publication number: WO 2025/014129

(57) **Abstract**

The present disclosure relates to a battery module including: a cell stack including a plurality of battery cells; a module case configured to accommodate the cell stack; and a top cover coupled to a top of the module case, wherein at least a portion of the top cover is configured to be separated from the module case by venting gas or flame emitted from the battery cell.

## Description

### TECHNICAL FIELD

The present disclosure relates to a battery module, and a battery pack and a vehicle including the same.

The present application claims priority to Korean Patent Application No. 10-2023-0090699 filed on July 12, 2023 in the Republic of Korea, the disclosures of which are incorporated herein by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. When a higher voltage is required, a battery module or battery pack may be configured by connecting a plurality of battery cells in series. In addition, a battery module or a battery pack may be configured by connecting a plurality of battery cells in parallel in order to increase the charge/discharge capacity. Accordingly, the number of battery cells included in the battery module or battery pack may be set in various ways depending on the required output voltage or charge/discharge capacity.

Meanwhile, since battery cells undergo chemical reactions during charging and discharging, their performance may deteriorate if they are used in an environment higher than an appropriate temperature, and if the heat fails to be controlled to the appropriate temperature, the battery cells are likely to unexpectedly ignite or explode. In addition, the battery module has a structure in which these battery cells are intensively stored inside a module housing. Therefore, if a thermal event occurs in one battery cell, the high-temperature gas and flame emitted therefrom may spread to adjacent battery cells, causing a chain reaction of battery cell explosions, which is very dangerous.

Therefore, it is necessary to develop a structure that, when thermal runaway occurs in the battery module, discharges the high-temperature gas or flame generated inside the battery module to the outside, thereby preventing heat accumulation inside the battery module, and prevents the discharged gas or flame from flowing back into the battery module.

### DISCLOSURE

### Technical Problem

The present disclosure has been designed to solve the problems of the related art, and therefore the present disclosure aims to provide a battery module that smoothly discharges gas or flame generated inside the battery module when thermal runaway occurs in the battery module to the outside of the battery module, thereby effectively preventing or delaying the propagation of thermal runaway between the cells.

In addition, the present disclosure aims to provide a battery module that prevents gas or flame discharged outside the battery module when thermal runaway occurs in the battery module from flowing back into the battery module, thereby improving safety and reliability thereof.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module including: a cell stack including a plurality of battery cells; a module case configured to accommodate the cell stack; and a top cover coupled to a top of the module case, wherein at least a portion of the top cover is configured to be separated from the module case by venting gas or flame emitted from the battery cell.

The module case may include a top plate that forms an upper surface of the module case and has at least one first venting hole, formed therein, through which venting gas emitted from the battery cell is discharged, and the top cover may be coupled to the top plate.

The top cover may be adhered to the top plate.

The top cover may include at least one second venting hole that is provided to cover the first venting hole and is configured to be separated from the top plate by pressure of the venting gas emitted from the battery cell.

The top cover may include a plurality of top cover areas in which some of the second venting holes are formed, and the plurality of top cover areas may be configured to be separated from each other.

The top cover may include a cutting line provided between the plurality of top cover areas so that the respective top cover areas are broken.

When the battery cell is venting, only the top cover area provided above the venting battery cell, among the plurality of top cover areas, may be separated from the top plate.

The remaining of the plurality of top cover areas may be configured to remain in a state of being coupled to the top plate.

A plurality of second venting holes may be provided, and the plurality of second venting holes may be configured to form at least one venting hole array arranged in a row along a longitudinal direction of the battery cell.

The plurality of battery cells may be provided to be stacked in one direction, and one of the venting hole arrays may be provided to correspond to two or more of the battery cells.

A plurality of venting hole arrays may be provided so as to be arranged in the one direction.

At least one of the venting hole arrays may be formed in each of the top cover areas.

In addition, the present disclosure provides a battery pack including a battery module according to the present disclosure.

In addition, the present disclosure provides a vehicle including a battery pack according to the present disclosure.

### Advantageous Effects

According to one aspect of the present disclosure, high-temperature gas or flame generated in a battery cell when the battery cell is in an abnormal state may be smoothly discharged to the outside of the battery module, thereby effectively preventing or delaying the propagation of thermal runaway between the cells.

In addition, according to another aspect of the present disclosure, high-temperature gas or flame generated in a battery cell when the battery cell is in an abnormal state may be prevented from flowing back into the battery module, thereby ensuring the safety and reliability of the battery module.

In addition, according to another aspect of the present disclosure, events due to thermal runaway of a battery pack including a plurality of battery modules or a device equipped with them, such as fire or explosion, may be prevented or delayed.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery module according to an embodiment of the present disclosure.
FIG. 2 is an exploded perspective view of a battery module according to an embodiment of the present disclosure.
FIG. 3 is a plan view of a battery module according to an embodiment of the present disclosure.
FIG. 4 is an incisional perspective view of a battery module according to an embodiment of the present disclosure.
FIG. 5 is a drawing illustrating a top cover in which a second venting hole is opened during thermal runaway of a battery module according to an embodiment of the present disclosure.
FIG. 6 is a drawing illustrating a top cover from which only a portion is separated during thermal runaway of a battery module according to an embodiment of the present disclosure.
FIG. 7 is a perspective view of a top cover according to an embodiment of the present disclosure.
FIG. 8 is a plan view of a battery module according to another embodiment of the present disclosure.
FIG. 9 is a drawing illustrating a top cover from which only a portion is separated during thermal runaway of a battery module according to another embodiment of the present disclosure.
FIG. 10 is a schematically perspective view of a battery pack including a battery module according to an embodiment of the present disclosure.
FIG. 11 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure includes various embodiments. Duplicate descriptions of substantially identical or similar configurations between respective embodiments will be omitted, and the description will be made based on the differences therebetween.

Meanwhile, although terms indicating directions such as upward, downward, left, right, forward, and backward directions are used in this specification, it is obvious to those skilled in the art that these terms are only for convenience of explanation and may vary depending on the position of the target object or the position of the observer.

For example, in the embodiment of the present disclosure, the X-axis direction shown in the drawing may indicate the left-right direction, the Y-axis direction may indicate the forward-backward direction perpendicular to the X-axis direction on the horizontal plane (X-Y plane), and the Z-axis direction may indicate the upward-downward direction (vertical direction) perpendicular to both the X-axis direction and the Y-axis direction.

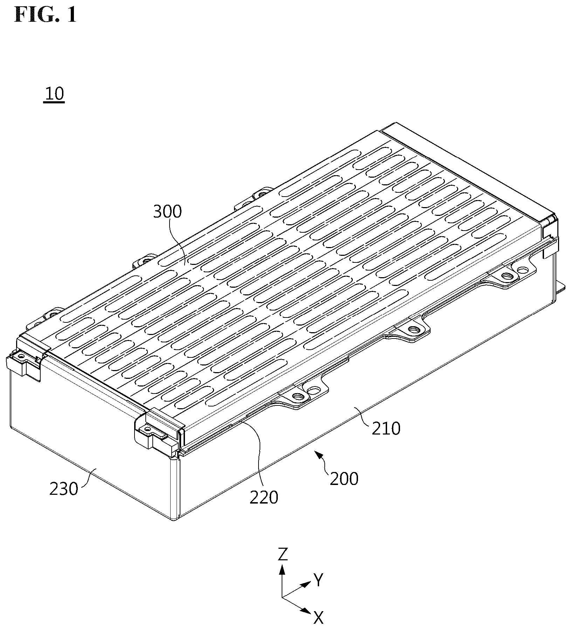

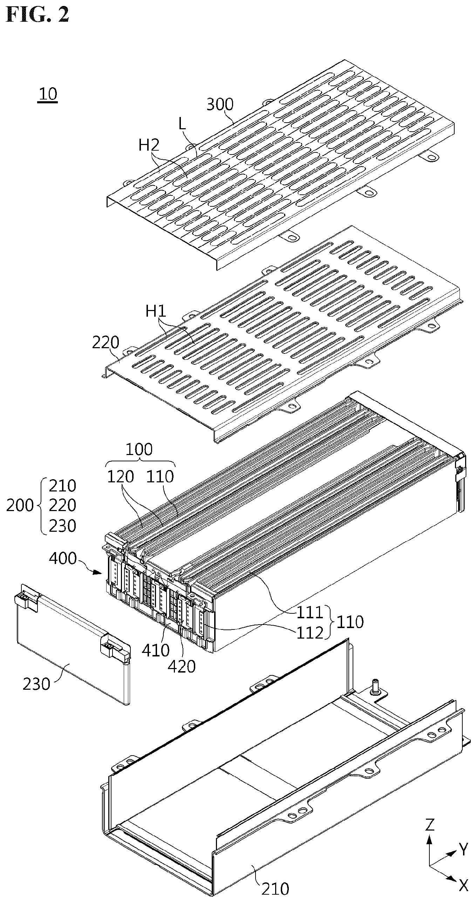

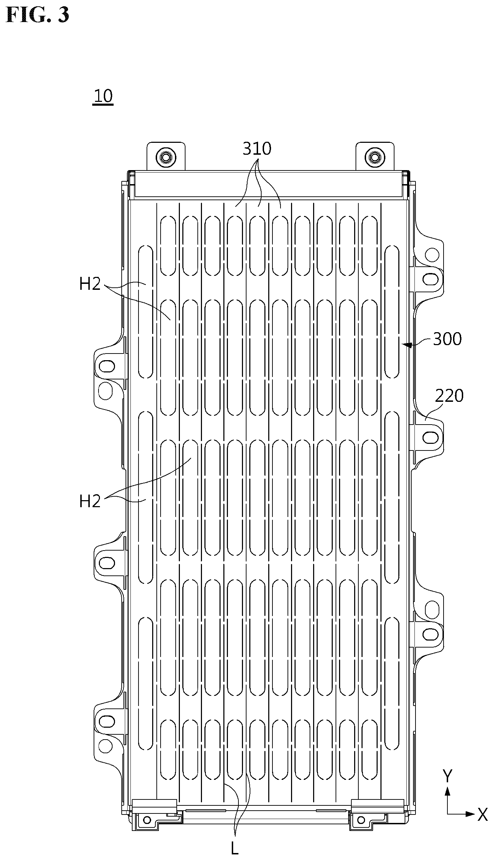

FIG. 1 is a perspective view of a battery module according to an embodiment of the present disclosure, and FIG. 2 is an exploded perspective view of a battery module according to an embodiment of the present disclosure. FIG. 3 is a plan view of a battery module according to an embodiment of the present disclosure.

Referring to FIGS. 1 to 3, a battery module 10 according to an embodiment of the present disclosure may include a cell stack 100, a module case 200, and a top cover 300.

The cell stack 100 may include battery cells 110. A plurality of battery cells 110 may be provided.

The plurality of battery cells 110 may be, for example, pouch-type secondary batteries. Each of the plurality of battery cells 110 may have an electrode lead 112. Specifically, the plurality of battery cells 110 may include an electrode assembly, a cell case 111 that accommodates the electrode assembly, and an electrode lead 112 that is connected to the electrode assembly and extends outside the cell case 111 to function as an electrode terminal. The cell case 111 may accommodate the electrode assembly in the storage space, and the edges around the storage space may be heat-fused to form a sealing portion.

A pair of electrode leads 112 may be provided, and the pair of electrode leads 112 may extend from both ends of the battery cell 110, that is, in the longitudinal direction (±Y-axis direction). In this case, the pair of electrode leads 112 may be a positive electrode lead and a negative electrode lead. The battery cell 110 may be configured such that two electrode leads 112 are located only at one end in the Y-axis direction, for example, at the end in the +Y-axis direction as necessary.

As illustrated in FIG. 2, the plurality of battery cells 110 may be arranged side by side in the left-right direction (X-axis direction) while standing in the vertical direction (Z-axis direction). In this case, each battery cell 110 may be disposed such that a sealing portion is directed in the forward-backward direction (Y-axis direction) and the upward-downward direction (Z-axis direction), and such that the storage space is directed in the left-right direction (X-axis direction).

The present disclosure is not limited to a specific type or shape of the battery cell 110, and various battery cells 110 known at the time of filing the present disclosure may be employed to form the cell stack 100 of the present disclosure. In the present embodiment, although a pouch-type secondary battery with high energy density and easy stacking will be described as shown in the drawing, it is obvious that a cylindrical or prismatic secondary battery may be applied to the battery cell 110.

The cell stack 100 may further include a blocking member 120. The blocking member 120 may be provided between the battery cells 110. In particular, a plurality of blocking members 120 may be included in one cell stack 100. The blocking members 120 may be disposed between every one or more battery cells 110. In the present embodiment, the blocking members 120 may be disposed between every two battery cells 110. According to the above-implemented configuration of the present disclosure, the battery cells 110 may be partitioned or separated to prevent gas or flame from spreading to other blocking members 120 adjacent to the blocking member 120.

The blocking member 120 may be made of a material having excellent heat resistance and/or fire resistance, such as silicone or aerogel. According to the above-implemented configuration of the present disclosure, the blocking member 120 may contribute to the structural rigidity of the battery cells 110 by compressing the battery cells 110 in the case of swelling of the battery cells 110.

Meanwhile, referring to FIG. 1 and FIG. 2, the module case 200 may be configured to accommodate the cell stack 100. Specifically, the module case 200 may have an inner space configured to accommodate the cell stack 100.

Meanwhile, referring to FIG. 2, the module case 200 may include a case body 210. For example, the case body 210 may be configured as a U-frame. In the case where the case body 210 is configured as a U-frame, it may be configured to cover both sides and the lower surface of the cell stack 100. The case body 210 may include a left plate and a right plate covering both sides of the cell stack 100, and a lower plate covering the lower surface of the cell stack 100. In addition, the left plate, the right plate, and the lower plate may be configured in an integrated form. In this case, the upper side and front and rear sides of the case body 210 may be opened. The case body 210 may be made of metal having rigidity and heat resistance in order to physically or chemically protect the stored battery cells 110.

The module case 200 may further include a top plate 220. The top plate 220 may be configured to form the upper side of the module case 200. In the case where the case body 210 is configured as a U-frame, the top plate 220 may be coupled to the open upper side of the case body 210. The top plate 220 may be coupled to the case body 210 by welding. In this case, the top plate 220 and the case body 210, which are coupled to each other, may have the shape of a square tube with front and rear openings.

In addition, the case body 210 may be configured to enable the battery cells 110 to be inserted thereinto in one direction. For example, the battery cells 110 may be inserted into the inside of the case body in the forward-backward direction (Y-axis direction). That is, the case body 210 may be configured such that the battery cells 110 are able to be inserted thereinto in a sliding manner.

Meanwhile, the module case 200 may include end plates 230 provided on the front and rear openings of the case body 210. The end plate 230 may be coupled to the case body 210 by welding. Meanwhile, although not shown for convenience, for example, the end plate 230 may have an insulating material on the inside and a metal material on the outside. In addition, the end plate 230 may be partially provided with holes or slits for exposing components that need to be exposed to the outside, such as a positive electrode terminal, a negative electrode terminal, or a connector of the battery module 10.

In addition, the module case 200 may be formed in various other shapes. For example, the module case 200 may have a box-shaped lower case having an upper opening and an upper cover that covers the upper opening of the lower case. In this case, the lower case may be configured such that left and right plates covering both sides of the cell stack 100 and the front and rear plates covering the front and rear sides of the cell stack 100 are integrally formed.

Alternatively, the module case 200 may be configured as a mono frame. For example, the case body 210 may be configured as a square tube having an upper surface, a lower surface, a left surface, and a right surface and having front and rear openings. According to the module case 200 including the mono frame, the battery module 10 may be assembled by assembling the cell stack 100 and a bus-bar frame assembly 400 and inserting them into the inside of the mono frame in a press-fitting manner and by coupling the end plates 230 to both openings of the mono frame. In this case, for the coupling of press fitting, it may be configured such that there is almost no gap between the lower surface of the case body 210 and the battery cells 110 and between the top plate 220 and the battery cells 110, and such that there is almost no gap between both side surfaces of the case body 210 and both sides of the battery cells 110.

Meanwhile, a first venting hole H1 may be formed in the top plate 220. The first venting hole H1 may be configured to discharge the venting gas generated in the battery cell 110 to the outside of the module case 200. The first venting hole H1 may be formed in the module case 200, enabling directional venting in one direction.

For example, as illustrated in FIG. 3, the first venting hole H1 may be formed in the top plate 220 to enable directional venting toward the top of the battery module 10 through the first venting hole H1. Specifically, a plurality of first venting holes H1 may be provided at regular intervals in the horizontal direction (X-axis and Y-axis directions).

According to the above-implemented configuration of the present disclosure, when one of the battery cells 110 undergoes thermal runaway and generates gas or the like, the gas or the like may be quickly vented in a specific direction from both sides of the module case 200.

As described above, the first venting hole H1 provided in the top plate 220 is configured such that gas or flame generated inside the battery module 10 may be discharged to the outside of the battery module 10 when thermal runaway occurs in the battery module 10. The remaining portions of module case 200, excluding the first venting hole H1, may be sealed, so that gas or flame may be discharged in a straight line toward the first venting hole H1.

Meanwhile, referring to FIG. 2, the battery module 10 of the present disclosure may further include a bus-bar frame assembly 400. The bus-bar frame assembly 400 may be provided inside the module case 200 and configured to cover at least one side of the cell stack 100. In the present embodiment, as illustrated in FIG. 2, the bus-bar frame assembly 400 may be coupled to the front and rear sides of the cell stack 100.

The above bus-bar frame assembly 400 may include a bus-bar frame 410 and a plurality of bus-bars 420. The bus-bar frame 410 may be disposed to be approximately coupled to the front and rear sides of the cell stack 100. The bus-bar frame 410 may have slits through which the electrode lead 112 of the battery cell 110 extend in the +Y-axis or -Y-axis direction. In addition, the bus-bar frame 410 may be formed of a material having electrical insulation, such as a plastic material, and may be configured such that the bus-bar 420 is able to be attached to the outer surface thereof.

In addition, the bus-bar frame 410 may be coupled to the front or rear sides of the cell stack 100 in a press-fitting manner.

Meanwhile, the plurality of bus-bars 420 are intended to connect the battery cells 110 in series and/or in parallel, and may be formed in a rod shape using a metal material such as copper, aluminum, nickel, or the like. The electrode leads 112 of the battery cells 110 may pass through the slits of the bus-bar frame 410 and extend outside the bus-bar frame 410, and the extending portions may be attached to the surface of the bus-bar 420 by welding or the like. If the electrode leads 112 of the battery cells 110 and the bus-bars 420 are welded in a predetermined pattern on the front and rear sides of the cell stack 100, the battery cells 110 may be connected in series and/or in parallel.

In the above-implemented configuration, referring to FIG. 2, the module case 200 has an inner space to accommodate the cell stack 100 and the bus-bar frame assembly 400 and is configured to protect the cell stack 100 from the outside.

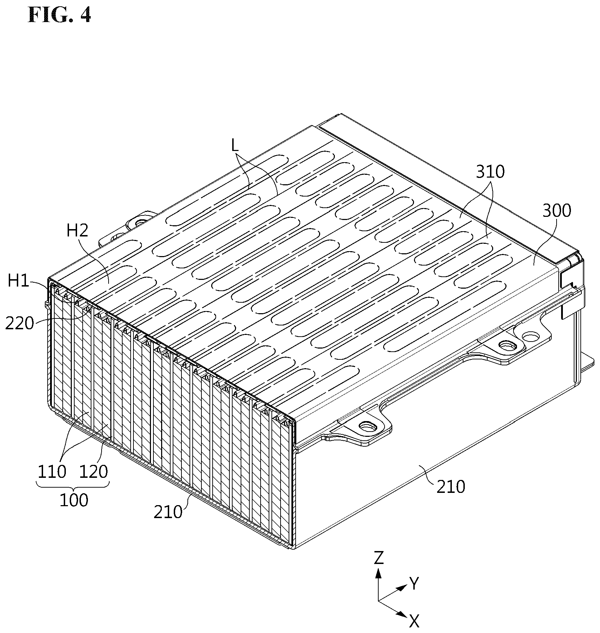

Meanwhile, the battery module 10 according to an embodiment of the present disclosure may further include a top cover 300. The top cover 300 according to an embodiment of the present disclosure will be described in more detail with reference to FIGS. 4 to 6.

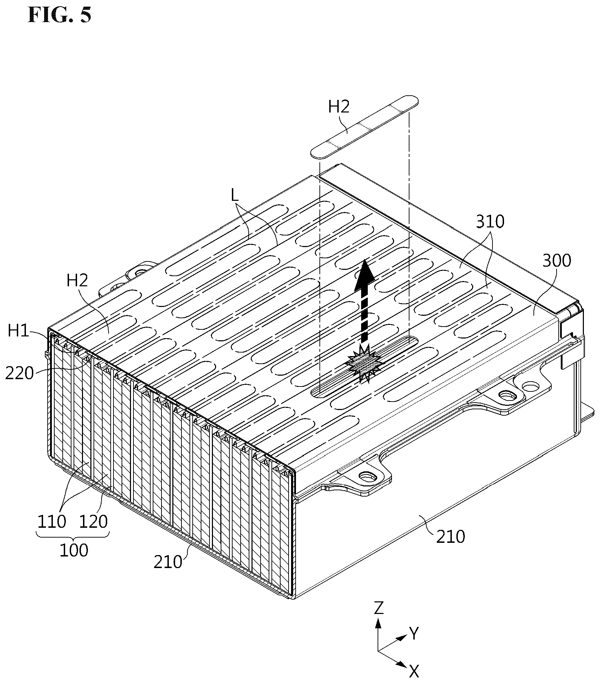

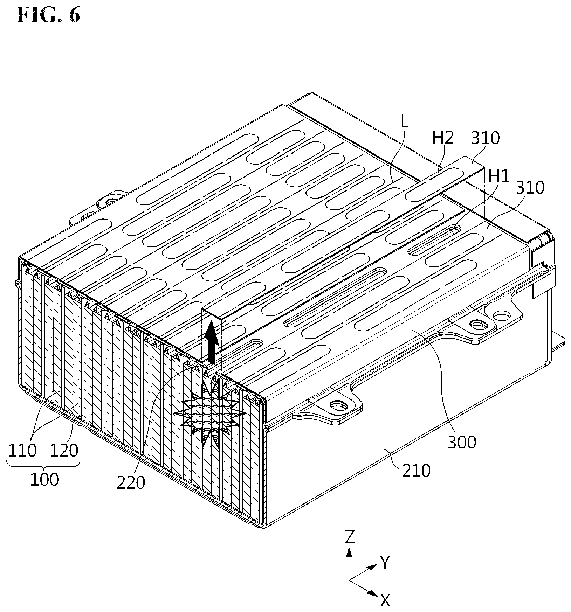

FIG. 4 is an incisional perspective view of a battery module according to an embodiment of the present disclosure, FIG. 5 is a drawing illustrating a top cover in which a second venting hole is opened during thermal runaway of a battery module according to an embodiment of the present disclosure, and FIG. 6 is a drawing illustrating a top cover from which only a portion is separated during thermal runaway of a battery module according to an embodiment of the present disclosure.

The top cover 300 may be coupled to the top of the module case 200. For example, the top cover 300 may be provided by being attached to the top of the module case 200. Specifically, the top cover 300 may be coupled to the top plate 220. The top cover 300 may be attached to the top plate 220 by an adhesive member. The adhesive member may include an adhesive, an adhesive tape, or the like.

Describing the above in detail with reference to FIGS. 5 and 6, at least a portion of the top cover 300 may be configured to be separated from the module case 200 by venting gas or flame emitted from the battery cell 110. Specifically, when thermal runaway occurs in the battery module 10, the adhesive member may melt due to the pressure of the gas, high-temperature dust, or flame emitted from the battery cell 110, thereby reducing the adhesive strength between the module case 200 and the top cover 300. The discharge pressure of the venting gas discharged in a straight line through the first venting hole H1 may act on the area with reduced adhesive strength between the module case 200 and the top cover 300 and push a portion of the top cover 300 in the discharge direction of venting gas, thereby separating it from the module case 200.

That is, in a normal state, the top cover 300 may shield the first venting hole H1 of the top plate 220 of the module case 200 to protect the cell stack 100 inside the module case 200. However, in a thermal event in which venting gas or flame is generated in some battery cells 110, at least a portion of the top cover 300 may be separated from the module case 200, so that the venting gas or flame discharged in a straight line through the first venting hole H1 of the top plate 220 may be smoothly discharged to the outside of the battery module 10 without interference of the path.

According to the above-implemented configuration of the present disclosure, since a portion of the top cover 300 is completely separated from the module case 200 so that the first venting hole H1 is exposed to the outside of the battery module 10, instead of sealing the first venting hole H1, the gas or flame may be completely discharged to the outside of the battery module 10.

In addition, the top cover 300 may prevent gas or flame discharged to the outside from flowing back into the battery module 10. If a portion of the top cover 300 remains without being separated from the module case 200 with the adhesive member having reduced adhesive strength, the venting gas or flame may be hindered from being discharged and is likely to penetrate into the loose interface between the top cover 300 and the module case 200 and flow back into the inside of the battery module 10. However, according to the above-implemented configuration of the present disclosure, since the portion of the top cover 300 with reduced adhesive strength is separated from the module case 200 and does not have any effect on the venting gas or flame, gas or flame discharged to the outside may be absolutely blocked from flowing back into the battery module 10.

The portion of the top cover 300, which is not separated from the module case 200, may block high-temperature gas, flame, discharged substances, or the like generated from the battery cell 110, as well as heat. To this end, the top cover 300 may be made of a material with excellent heat resistance and/or fire resistance, such as mica, a FRB (Fire Resistant Barrier), or a pad combined with silicon. The FRB may include an inorganic material that is easily deformed, and may be made of a material with excellent flame retardancy and ignition resistance. Therefore, if a pad is formed by combining FRB and silicon, it does not shrink and maintains its shape even when high-temperature heat is generated, thereby stably blocking high-temperature gas or flame generated from the battery cell 110.

According to the above-implemented configuration of the present disclosure, gas or flame generated inside the battery module 10 when thermal runaway occurs in the battery module 10 may be smoothly discharged to the outside of the battery module 10, and the gas or flame discharged outside the battery module 10 may be prevented from flowing back into the battery module 10. Accordingly, it is possible to minimize the propagation of heat to neighboring battery modules 10 to effectively prevent or delay the propagation of thermal runaway, thereby improving safety and reliability of the battery module 10.

At least a portion of the top cover 300, which is separated from the module case 200 during a thermal event, may be provided in a predetermined local area to have a hole shape, preferably in a position above the first venting hole H1 to correspond thereto.

Specifically, the top cover 300 may include a second venting hole H2. A plurality of second venting holes H2 may be provided so as to cover and correspond to the first venting holes H1. The second venting hole H2 may be provided at a position where the first venting hole H1 is formed and have the same shape and size as the first venting hole H1. That is, a hole is formed in the top cover 300, and a member covering the hole may be provided. The cover member and the hole may be collectively defined as the second venting hole H2.

Referring to FIG. 5, the second venting hole H2 may be provided in the top plate 220 so as to be opened by the pressure of the venting gas emitted from the battery cell 110. Specifically, if gas is discharged from the first venting hole H1 corresponding to the second venting hole H2, only the second venting hole H2 provided above the venting battery cell 110 may be configured to be opened in the top cover 300. To this end, a cut groove may be formed along the shape of the second venting hole H2.

In addition, the battery module 10 according to the present disclosure may be assembled by storing the cell stack 100 inside the case body 210, welding the top plate 220 and the end plates 230 to the case body 210 to complete the appearance of the battery module 10, and then applying an adhesive member to the top plate 220 and attaching the top cover 300 onto the same. In this case, all the remaining portions of the top cover 300, excluding the second venting holes H2, may be attached to the top plate 220 by an adhesive member. Specifically, since the second venting hole H2 is not attached to the top plate 220 by an adhesive member, the second venting hole H2 may be easily opened by the pressure of the venting gas.

Accordingly, according to the above-implemented configuration of the present disclosure, when a thermal event occurs, gas or flame generated inside the battery module 10 may be discharged to the outside of the module case 200 through the opened second venting hole H2. In addition, at the same time, since the remaining second venting holes H2 remain in the sealed on the top plate 220, the discharged gas may be prevented from flowing back into the inside of the module case 200.

At least a portion of the top cover 300 separated from the module case 200 during the thermal event may have, for example, a band shape along the longitudinal direction of the battery cell 10.

Specifically, referring to FIGS. 3 to 6, the top cover 300 may include a plurality of top cover areas 310. Some of the second venting holes H2 may be formed in each of the plurality of top cover areas 310. The plurality of top cover areas 310 may be provided so as to be separated from the top plate 220. Specifically, when an event occurs in a battery cell 110, the second venting hole H2 is opened first by the venting gas generated therefrom, and when flame is generated inside the module case 200 by the venting gas or spark and discharged through the first venting hole H1, the adhesive strength between the top cover 300 and the module case 200 may be reduced by the high-temperature heat of the flame, so that the top cover area 310 provided above the battery cell 110 may be separated.

In this case, the top cover 300 may be configured such that the plurality of top cover areas 310 are integrally manufactured so as to be separated from each other. According to the above-implemented configuration of the present disclosure, compared to the case where the plurality of top cover areas 310 are manufactured separately and then combined to form one top cover 300, the cost and time may be reduced when manufacturing the battery module 10, thereby improving productivity.

The top cover 300 may include a cutting line L. The cutting line L may be provided between the plurality of top cover areas 310. The cutting line L may be provided as a broken line or a solid line by forming a groove in a portion of the top cover 300. The cutting line L may be configured to be weaker than the adjacent area so that it may be easily broken when the adhesive strength between the top cover 300 and the top plate 220 is reduced. As the cutting lines L are provided, the respective top cover areas 310 may be broken by gas or flame emitted from any battery cell 110.

Specifically, referring to FIG. 5, in the venting process of a battery cell 110, only the top cover area 310 provided above the venting battery cell 110, among the plurality of top cover areas 310, may be separated from the top plate 220. In addition, the remaining top cover areas 310, excluding the separated top cover area 310, may remain in the coupled state with the top plate 220. For example, as shown in FIG. 5, when flame occurs in a battery cell 110, the adhesive member of the top cover area 310 provided above the venting battery cell 110 may melt due to high-temperature heat of the flame, reducing the adhesive strength between the top cover area 310 and the top plate 220, so that only the portion of the top cover 300 located above the battery cell 110 may be separated.

According to the above-implemented configuration of the present disclosure, flame existing inside the module case 200 may be efficiently vented through the separated top cover area 310. In addition, according to the above-implemented configuration of the present disclosure, since only a partial top cover area 310 is separated, gas or flame discharged through the separated top cover area 310 may be prevented from flowing back into the module case 200 through other areas remaining in the coupled state with the top plate 220.

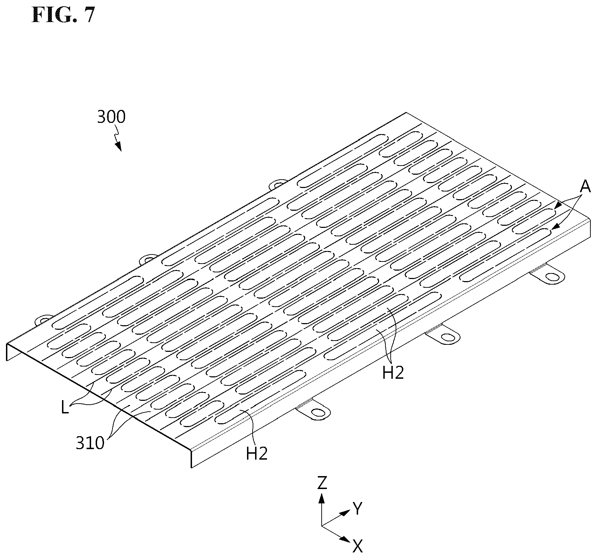

FIG. 7 is a perspective view of a top cover according to an embodiment of the present disclosure.

A plurality of second venting holes H2 may be provided. The plurality of the second venting holes H2 may form a venting hole array A. The venting hole array A may be formed by arranging the second venting holes H2 in a row along the longitudinal direction of the battery cell 110. As shown in the embodiment of FIG. 6, the venting hole array A may be formed by a plurality of the second venting holes H2 arranged in a row along the Y-axis direction. According to the embodiment configuration of the present disclosure, even if a thermal event occurs at any position in the battery cell 110, gas or flame generated from the battery cell 110 may be discharged to the outside of the battery module 10 through the second venting holes H2 included in the venting hole array A provided above the battery cell 110.

Referring to FIGS. 4 to 7, a plurality of venting hole arrays A may be provided, and the plurality of the venting hole arrays A may be arranged in parallel to each other along one direction, that is, along a direction (X-axis direction) in which the battery cells 110 are stacked. In this case, at least one venting hole array A may be formed in each top cover area 310. According to an embodiment of the present disclosure, one venting hole array A and the top cover area 310 may be provided to correspond to two or more battery cells 110. In this case, as described above, the first venting hole H1 may be provided to correspond to the position and size of the second venting hole H2.

In the battery module 10 according to an embodiment of the present disclosure, as shown in FIGS. 4 to 7, blocking members 120 may be disposed between every two battery cells 110, and one top cover area 310 may be provided above the portion between the blocking members 120. One venting hole array A may be formed for each top cover area 310.

According to the above-implemented configuration, even if a thermal event occurs in any one of the two battery cells 110, a specific top cover area 310 in which the venting hole array A is formed above the battery cell 110 may be separated from the top plate 220 by the pressure and/or heat of the venting gas. As a result, gas or flame may be smoothly discharged to the outside of the battery module 10 through the separated top cover area 310.

In addition, according to this configuration, gas or flame emitted from the battery cell 110 provided between adjacent blocking members 120 may be discharged to the outside of the module case 200 only through the first venting hole H1 and separated top cover area 310, which are located between the adjacent blocking members 120. That is, since the surrounding area of the first venting hole H1 is completely blocked, directional venting of gas may be more effectively induced in the upward direction.

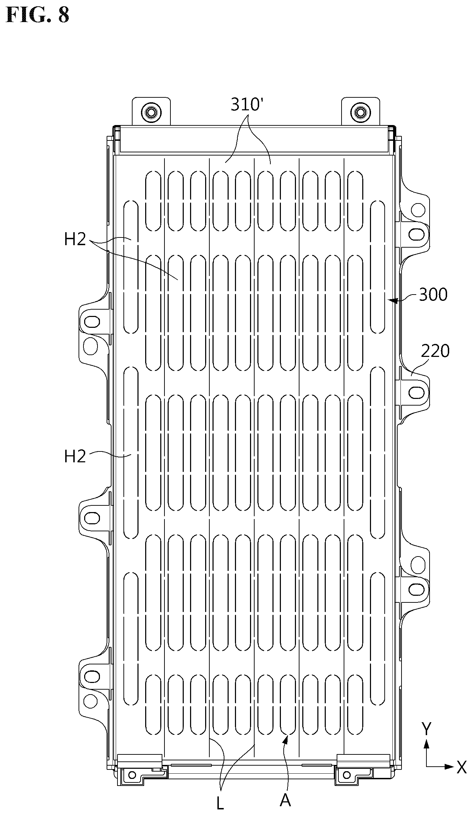

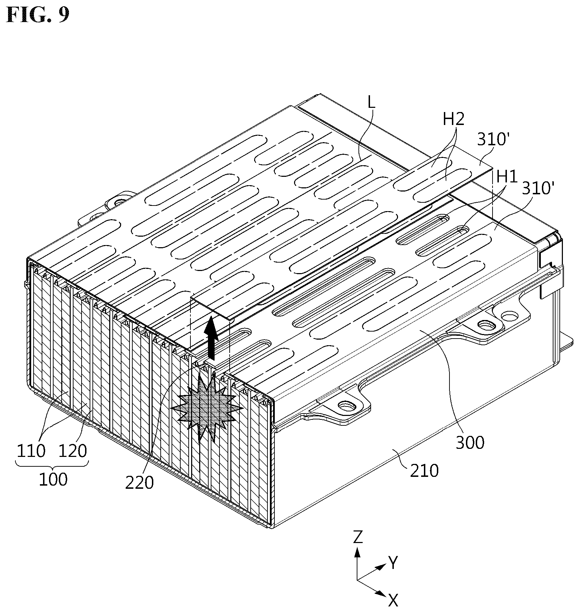

FIG. 8 is a plan view of a battery module according to another embodiment of the present disclosure, and FIG. 9 is a drawing illustrating a top cover from which only a portion is separated during thermal runaway of a battery module according to another embodiment of the present disclosure.

Meanwhile, the battery module 10 according to another embodiment of the present disclosure may be configured such that two or more venting hole arrays A are formed in each top cover area 310.

As shown in FIG. 8 and FIG. 9, in the battery module 10 according to another embodiment of the present disclosure, blocking members 120 may be disposed between every two battery cells 110, and one top cover area 310' may be provided above the portion between the two blocking members 120. Two venting hole arrays A may be formed in one top cover area 310'. That is, in the battery module 10 according to another embodiment of the present disclosure, one top cover area 310' may be provided for every four battery cells 110.

According to the above-implemented configuration, when a thermal event occurs in a battery cell 110, adjacent battery cells 110 may explode sequentially. In this case, as the number of battery cells 110 corresponding to one top cover area 310' increases, the internal pressure and/or temperature may further increase due to gas or flame discharged from the battery cells 110, so that the top cover area 310' may be separated more quickly from the top plate 220. As a result, the gas or flame inside the battery module 10 may be discharged more quickly to the outside of the module case 200, thereby further ensuring safety.

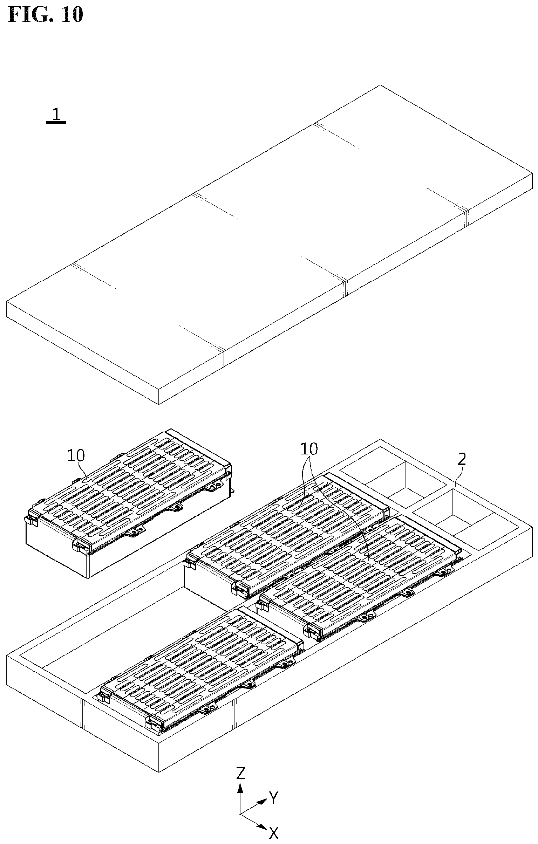

FIG. 10 is a schematically perspective view of a battery pack including a battery module according to an embodiment of the present disclosure.

Referring to FIG. 10, a battery pack 1 according to an embodiment of the present disclosure may include one or more battery modules 10 according to an embodiment of the present disclosure described above. The battery pack 1 according to the present disclosure may further include a pack case 2 for storing the components described above, such as a BMS (Battery Management System) for integrated control of charging and discharging of one or more battery modules, a current sensor, a fuse, or the like.

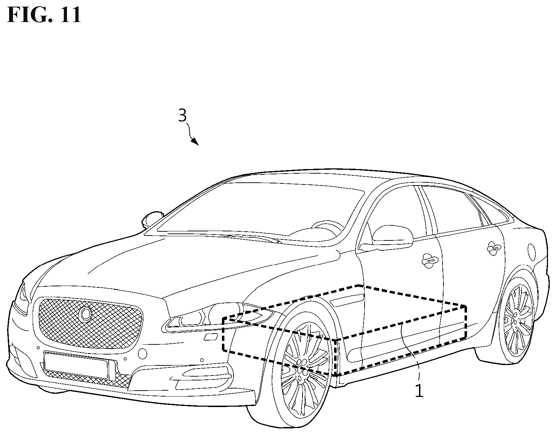

FIG. 11 is a schematically perspective view of a vehicle including a battery pack according to an embodiment of the present disclosure.

Referring to FIG. 11, a vehicle 3 according to an embodiment of the present disclosure may include one or more battery packs 1 according to an embodiment of the present disclosure or battery modules 10 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 receives power from the battery pack 1 or the battery module 10 according to an embodiment of the present disclosure and drives.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery module comprising:
a cell stack comprising a plurality of battery cells;
a module case configured to accommodate the cell stack; and
a top cover coupled to a top of the module case,
wherein at least a portion of the top cover is configured to be separated from the module case by venting gas or flame emitted from the battery cell.

2. The battery module according to claim 1,
wherein the module case comprises
a top plate that forms an upper surface of the module case and has at least one first venting hole, formed therein, through which venting gas emitted from the battery cell is discharged, and
wherein the top cover is coupled to the top plate.

3. The battery module according to claim 2,
wherein the top cover is adhered to the top plate.

4. The battery module according to claim 2,
wherein the top cover comprises
at least one second venting hole that is provided to cover the first venting hole and is configured to be separated from the top plate by pressure of the venting gas emitted from the battery cell.

5. The battery module according to claim 3,
wherein the top cover includes a plurality of top cover areas in which some of the second venting holes are formed, and
wherein the plurality of top cover areas are configured to be separated from each other.

6. The battery module according to claim 5,
wherein the top cover comprises
a cutting line provided between the plurality of top cover areas so that the respective top cover areas are broken.

7. The battery module according to claim 5,
wherein, when the battery cell is venting, only the top cover area provided above the venting battery cell, among the plurality of top cover areas, is separated from the top plate.

8. The battery module according to claim 7,
wherein the remaining of the plurality of top cover areas are configured to remain in a state of being coupled to the top plate.

9. The battery module according to claim 5,
wherein a plurality of second venting holes are provided, and
wherein the plurality of second venting holes are configured to form at least one venting hole array arranged in a row along a longitudinal direction of the battery cell.

10. The battery module according to claim 9,
wherein the plurality of battery cells are provided to be stacked in one direction, and
wherein one of the venting hole arrays is provided to correspond to two or more of the battery cells.

11. The battery module according to claim 10,
wherein a plurality of venting hole arrays are provided so as to be arranged in the one direction.

12. The battery module according to claim 11,
wherein at least one of the venting hole arrays is formed in each of the top cover areas.

13. A battery pack comprising a battery module according to any one of claims 1 to 12.

14. A vehicle comprising a battery pack according to claim 13.
